# EUROPEAN PATENT SPECIFICATION

(11) **EP 4 578 530 B1**
(45) Date of publication and mention of the grant of the patent: **17.06.2026**
(21) Application number: 23220816.5
(22) Date of filing: 29.12.2023
(51) Int. Cl.: B01D 53/04, B01D 53/047, B01J 20/22, B01J 20/28

(54) **PROCESS FOR THE SEPARATION OF KRYPTON FROM A WASTE GAS STREAM**
VERFAHREN ZUR KRYPTONTRENNUNG AUS EINEM ABGASSTROM
PROCÉDÉ DE SÉPARATION DE KRYPTON D'UN COURANT DE GAZ D'ÉCHAPPEMENT

(43) Date of publication of application: 02.07.2025
(73) Proprietor: Immaterial Ltd, Cambridge CB4 0FW (GB)
(72) Inventor: KUMAR, Naveen, Cambridge, CB4 0FW (GB); CAMUR, Ceren, Cambridge, CB4 0FW (GB); SHARMA, Ishan, Cambridge, CB4 0FW (GB); FARMAHINI, Amir, Cambridge, CB4 0FW (GB); BABU, Robin, Cambridge, CB4 0FW (GB); LI, Aurelia, Cambridge, CB4 0FW (GB); FAIREN-JIMENEZ, David, Cambridge (GB)
(74) Representative: Patent Boutique LLP

(56) References cited:
- WO-A1-2008/062034
- WO-A1-2020/113281
- FAN WEIDONG ET AL: "Isoreticular chemistry within metal-organic frameworks for gas storage and separation", COORDINATION CHEMISTRY REVIEWS, ELSEVIER SCIENCE, AMSTERDAM, NL, vol. 443, 13 May 2021 (2021-05-13), XP086603988, ISSN: 0010-8545, [retrieved on 20210513], DOI: 10.1016/J.CCR.2021.213968
- EMMANUEL HALDOUPIS ET AL: "Efficient Calculation of Diffusion Limitations in Metal Organic Framework Materials: A Tool for Identifying Materials for Kinetic Separations", JOURNAL OF THE AMERICAN CHEMICAL SOCIETY, vol. 132, no. 21, 7 May 2010 (2010-05-07), pages 7528 - 7539, XP055339048, ISSN: 0002-7863, DOI: 10.1021/ja1023699

## Description

### Field of the Invention

The present invention relates to the field of recycling and purifying of waste gas streams comprising krypton, especially from the manufacture of semiconductors. Specifically, the invention relates to a method for purifying waste gas mixtures comprising krypton and carbon tetrafluoride (CF₄). Separation of krypton from carbon tetrafluoride is typically more difficult than from other gases, such as from nitrogen.

### Background of the Invention

Krypton is widely used in multiple industries including semiconductor and electronics manufacturing. The high cost of krypton makes it economically attractive to recover as much krypton as possible from krypton-containing gas waste streams coming from such facilities. The waste streams will typically contain a mixture of different gases, so any recovery and recycling process typically needs to include multiple different purification steps to deal with the different species present. Examples of such steps in current systems include cryo-distillation and plasma treatment. Such steps are typically very energy-intensive and costly. Hence there is an ongoing need for improved recycling processes and materials for use in such processes.

### Pressure Swing Adsorption Purification

Pressure Swing Adsorption (and variations thereof) is a widely used process for the concentration and/or purification of gas mixtures that often offers cost and process advantages over alternative processes.

As used herein, the term "Pressure Swing Adsorption" (PSA) may also describe any related process such as Temperature Swing Adsorption, Vacuum Pressure Swing Adsorption, and any combination thereof.

Typically, the gas mixture to be purified is brought into contact with a sorbent material in a vessel at some specific pressure and temperature. Typically, one species in the mixture will have a preferential tendency to physisorb onto the surfaces (external and/or internal) of the sorbent material and this can be used to separate the species. Once the sorbent material has adsorbed at least some of the preferred species, then the pressure is typically reduced and/or the temperature is increased, causing the adsorbed material to be desorbed and subsequently collected. Typically, the pressures and temperatures of such processes need to be carefully optimised and controlled for optimum performance.

Traditionally, sorbents used in PSA processes have typically been limited to one of four categories: activated carbons, natural and synthetic zeolites, silica gel, and activated alumina. These have combined annual worldwide sales of well over $1 billion. These materials typically have high surface areas and large pore volumes, which enables physisorption of even weakly interacting adsorbate species. However, such sorbents typically lack synthetic diversity with a limited range of available chemistries and hence limited ability to "tune" selectivity. Whilst many examples of commercial sorbents exist, such as zeolites, in general, systematic alteration of their structure and chemistry is typically difficult. Thus, there is a constant need for new microporous sorbents with adsorptive properties with higher selectivity. There is also a constant need or benefit in simplifying and reducing the cost, energy usage and complexity of separation processes. Current processes may have more than one PSA system using different sorbents to carry out different separations in sequence to achieve the desired overall separation.

Thus, there is a constant need for new microporous sorbents with adsorptive properties with higher selectivity There is also a constant need or benefit in simplifying and reducing the cost, energy usage and complexity of separation processes.

### Metal-Organic Frameworks as Sorbents

Metal-Organic Frameworks (MOFs) are a relatively new class of porous crystalline adsorbent materials based on metal cation "structural building units" held together by organic bridging ligands. MOFs typically have very high surface areas and porosities and can be more easily "tuned" or modified to have high selectivity for adsorbing target chemistries compared to traditional sorbents. The structure of the selected MOF, the choice of metal cation and ligand can typically be used to vary parameters such as the level and nature of open metal sites and hence optimise the adsorption of selected species. The use of MOFs and MOF-containing compositions and bodies as possible adsorbents in PSA systems is described in the literature. The high performances of MOFs, compared to other sorbents, can typically allow for a simplification of process technology and /or reduction in processing costs.

As used herein, references to a MOF may also describe derivatives of the MOF having the same structure, including derivatives of the ligands and changes to the metal ions, unless specified otherwise. For example, references to CPO-27 would include CPO-27-Ni, CPO-27-Mg, CPO-27-Mg-NH₂ and other variants, unless otherwise specified.

### Adsorption of Target Species by MOFs

The use of hydrophobic MOFs to preferentially adsorb more polarizable gases, such as CO₂, over less polarizable gases, such as N₂, is known and described in the art. Typically, the more easily an adsorbate species can be polarised, the more easily the species can be adsorbed onto the internal surface of the hydrophobic MOF. This can be due to the formation of (weak) electrostatic bonds such as hydrogen bonds between the adsorbate species and the ligands of the MOF. The general term "hydrophobic" is used to describe MOFs that show Type V sorption isotherms for the adsorption of water. The hydrophobicity of a MOF is a function of the ligand chemistry and the porous texture.

Gaseous waste streams from semiconductor plants typically comprise mixtures of krypton, CF₄ and nitrogen. They may include other contaminants. This combination can present specific difficulties for PSA separation processes utilising hydrophobic MOFs to separate krypton from nitrogen and CF₄. Krypton has a full outer shell of electrons. CF₄, whilst obviously having no overall dipole, nevertheless has polarised bonds due to the very high electronegativity of the fluorine and can behave in a somewhat similar manner to krypton in being partially polarizable.

For example, CPO-27 can be used to separate krypton from nitrogen for krypton/nitrogen mixtures and demonstrates high performance and selectivity in this application. However, the inventors have observed that CPO-27 alone cannot be used to separate krypton from waste streams comprising krypton and CF₄, and typically nitrogen as well, as the CF₄ is adsorbed by CPO-27 to a similar extent as krypton. Hence the ability to adsorb krypton is a necessary requirement for any adsorbent used in a krypton purification process when the mixture also comprises CF₄, but it is not sufficient. WO2008062034 A1 discloses the adsorptive separation of Kr/CF4 over a MOF comprising at least one at least bidentate organic compound coordinatively bound to at least one metal ion.

In any PSA separation process, it is typically necessary to control the kinetics of the adsorption and desorption processes. This is typically achieved by careful control of the applied pressures and temperatures for adsorption and desorption as well as the particle sizes and properties of the adsorbent bodies. The required conditions are typically specific to the adsorbent material, the adsorbate, and the composition of the gas stream to be purified. If any of these operating parameters are not within the necessary parameters, then the overall result is non-optimum, and the very high purities required cannot be achieved.

Typically, the more easily an adsorbent species can be polarised, the more easily the species can typically be adsorbed onto the surface of the MOF pores due to the formation of electrostatic bonds between the adsorbent species and the open metal sites of the MOF. The use of hydrophobic MOFs to selectively adsorb more polarizable gases such as CO₂ over less polarizable gases such as N₂ is known and described in the art.

There is considerable art relating to the separation and purification of krypton and xenon mixtures. Radioactive decay of nuclear wastes produces mixes of radioactive krypton and xenon, and it is necessary to capture and remove such hazardous materials from waste gas streams. However, the very different conditions relating to these situations mean that very few lessons and techniques can be readily reapplied to other situations requiring the purification of waste gas mixes comprising krypton and CF₄.

The inventors have now discovered that certain MOFs having hydrophobic ligand chemistries and a specific range of largest cavity diameter (or LCD) are able to adsorb krypton but not adsorb CF₄. The LCD is defined as the diameter of the largest sphere that can fit in the pore of the MOFs. LCDs are theoretically calculated based on the crystalline structure of the MOFs. They have the advantage of each MOF having one value. A MOF may have multiple pore sizes depending on the structure and topology of the MOF crystal and many measurements of pore sizes, such as those calculated from adsorption isotherms, give size distributions which give limited information about the ability of a material to selectively adsorb specific species.

The inventors have found that the LCD of a MOF is particularly well suited to determine whether an adsorbate species can fit inside the pores of a MOF. An adsorbate having a kinetic dimension larger than the LCD will be unable to fit within the pores of the MOF and hence will not be adsorbed. Hence, identifying hydrophobic MOFs that have LCDs within a specified range can be used to separate krypton from mixes comprising krypton and the larger CF₄ in PSA processes. This requirement has not been investigated in the art and published literature, for example relating to the use of MOFs for the separation of Xenon from Xe/Kr/N₂ mixes or krypton from Kr/N₂ mixes do not address this specific issue.

The inventive process uses hydrophobic MOFs having a largest cavity diameter (LCD) of between 3.3 angstroms and 4.5 angstroms. Especially preferred MOFs include CALF-20, TIFSIX-3-Ni and NbOFFIVE-1-Ni.

LCDs can be determined by use of software such as Zeo++ utilising the Crystal Information Files (.cif) for that MOF taken from the Cambridge Structural Database at the Crystallographic Data Center (CCDC) and using the Universal Force Field (UFF) to determine the atomic radii.

Such MOFs and a separation step using such MOFs can be used as one part of a krypton purification and separation system wherein the waste stream can be passed through other MOF adsorbents, such as CPO-27, to remove other species.

The inventors have found that a two-step purification process involving hydrophobic MOFs can be used to purify the krypton waste stream to a very high level. In the first step, the hydrophobic MOF is selected to have an LCD within a specified range to help separate CF₄ from the waste stream to produce a krypton-enriched stream. In the second step, hydrophobic MOF is used to separate nitrogen from the krypton-enriched stream. In the second step, the hydrophobic MOF, such as CPO-27, can have a larger LCD than the material in the first step.

The inventors have also observed that the use of a "rinsing" step after the adsorption step in the first step and before the desorption step wherein a high-purity krypton stream is bled into the adsorption column, enhances the amount of purified krypton that can be recovered.

### Summary of the Invention

The present invention provides a process for the separation of krypton from a waste gas stream, wherein the waste gas stream comprises greater than 10 v/v% krypton and greater than 0.5 v/v% CF₄, wherein the process comprises the steps of:
(a) passing the waste gas stream through a bed of material comprising hydrophobic metal-organic framework bodies to form krypton-enriched metal-organic framework bodies and a krypton-depleted gas stream,
   wherein the hydrophobic metal-organic framework forming the bodies have a largest cavity diameter of from 3.3 angstroms to 4.5 angstroms,
   and wherein step (a) is carried out at a pressure of from 100 kPa to 1000 kPa and at a temperature of from 0 °C to 50 °C;
(b) stopping the passage of the waste gas stream through the bed of material; and
(c) subjecting the krypton-enriched metal-organic framework bodies to a temperature of between 0 °C and 100 °C and a pressure of less than 100 kPa to remove at least some of the krypton from the krypton-enriched metal-organic framework bodies to form a krypton-enriched gas stream,
   wherein the krypton-enriched gas stream comprises greater than 50 v/v% krypton and less than 0.01 v/v% CF₄.

After step (b) and before step (c), a preferred option is to have a rinsing step (step b2) involving the feeding of a highly purified krypton stream, such as > 99.9 % purity, into the bed to enhance the removal of non-krypton impurities from the bed.

### Brief description of the drawings

Figure 1 shows the relative performance of the inventive MOFs CALF-20, TIFSIX-3-Ni and NbOFFIVE-1-Ni MOFs as adsorbents for krypton as compared to CF₄.

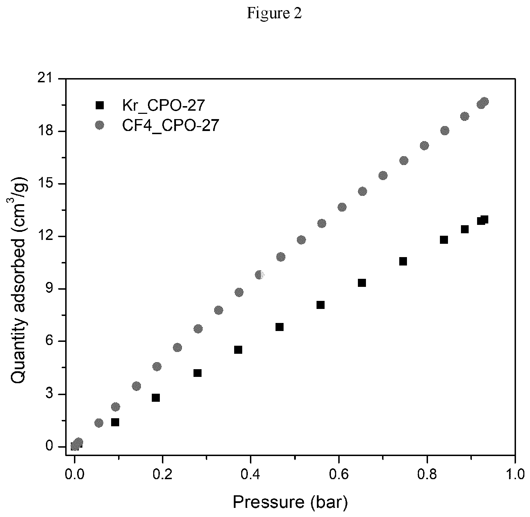

Figure 2 shows the inability of a MOF having an LCD greater than the specified limit to selectively adsorb krypton compared to CF₄.

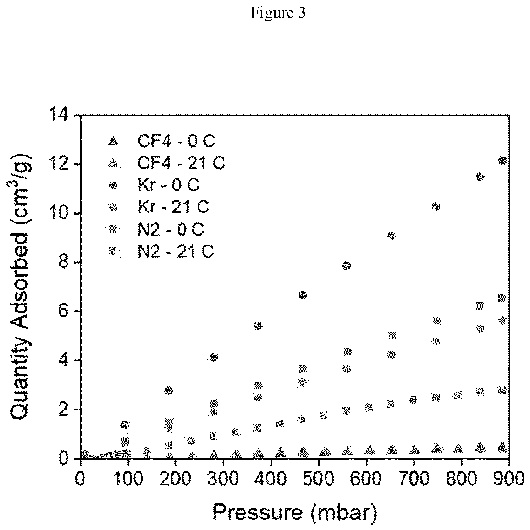

Figure 3 shows the effect of controlling the temperature for a MOF.

### Process for the separation of krypton from a waste gas stream.

The process provides for the separation of krypton from a waste gas stream, wherein the waste gas stream comprises greater than 10 v/v% krypton and greater than 0.5 v/v% CF₄, wherein the process comprises the steps of:
(a) passing the waste gas stream through a bed of material comprising hydrophobic metal-organic framework bodies to form krypton-enriched metal-organic framework bodies and a krypton-depleted gas stream,
   wherein the hydrophobic metal-organic framework forming the bodies has a largest cavity diameter of from 3.3 angstroms to 4.5 angstroms,
   wherein the krypton-depleted gas stream comprises less than 50 v/v% krypton and greater than 10 v/v% CF₄,
   and wherein step (a) is carried out at a pressure of from 100 kPa to 1000 kPa and at a temperature of from 0 °C to 50 °C;
(b) stopping the passage of the waste gas stream through the bed of material; and
(c) subjecting the krypton-enriched metal-organic framework bodies to a temperature of between 0 °C and 100 °C and a pressure of less than 100 kPa to remove at least some of the krypton from the krypton-enriched metal-organic framework bodies to form a krypton-enriched gas stream,
   wherein the krypton-enriched gas stream comprises greater than 50 v/v% krypton and less than 0.01 v/v% CF₄.

A preferred feature is to operate all of steps (a) to (c) at the same temperature and to rely solely on changes in pressure to adsorb and desorb the gases. This has operating and cost advantages.

A preferred option is to include a krypton rinsing step (step b2) after step (b) and before step (c) wherein a high purity krypton stream is passed through the adsorption column to help in the removal of other gases and impurities.

**Step (a), passing the waste gas stream through a bed of material comprising hydrophobic metal-organic framework bodies.**

Step (a) passes the waste gas stream through a bed of material comprising hydrophobic metal-organic framework bodies to form krypton enriched metal-organic framework bodies and a krypton depleted gas stream.

Step (a) is carried out at a pressure of from 100 kPa to 1000 kPa and at a temperature of from 0 °C to 50 °C, preferably from 10 °C to 25 °C.

**Step (b), stopping the passage of the waste gas stream through the bed of material.**

Step (b) stops the passage of the waste gas stream through the bed of material.

**Step (c), removing at least some of the krypton from the krypton enriched metal-organic framework bodies.**

Step (c) subjects the krypton enriched metal-organic framework bodies to a temperature of between 0 °C and 100 °C and a pressure of less than 100 kPa so as to remove at least some of the krypton from the krypton enriched metal-organic framework bodies to form a krypton enriched gas stream.

### Hydrophobic metal-organic framework bodies.

The hydrophobic metal-organic framework forming the bodies have a largest cavity diameter of from 3.3 angstroms to 4.5 angstroms.

The LCDs of MOFs can be determined by use of software such as Zeo++ utilising the Crystal Information Files (.cif) for that MOF taken from the Cambridge Structural Database at the Crystallographic Data Center (CCDC) and using the Universal Force Field (UFF) to determine the atomic radii.

The ability of any MOF to separate a species depends on the ability of the species of interest to form some nature of bond when within the pores of the MOF with metal ions and/or ligands forming the MOF. Certain divalent and trivalent metal species are particularly suitable for adsorbents due to their high charge density which allows electrostatic bonds to be formed with polarizable gaseous species. These metals ions include Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺², Al⁺³, Fe⁺³, Cr³⁺, Ru³⁺ and Co³⁺.

It is highly preferable to form the MOFs useful for the selective adsorption of krypton from mixtures containing krypton and CF₄ into bodies having a monolithic form.

Preferably, the hydrophobic metal organic framework comprises one or more ligands selected from: pyrazine; 4,4'-bipyridine; 4,4'-azo-bis(pyridine); 1,2-bis(4-pyridyl)ethene; 1,2-bis(4-pyridyl)ethane; 1,2-di(pyridine-4-yl)ethane-1,2-diol; 3-[(trimethylsilyl)ethynyl]-4-[2-(4-pyridinyl)ethenyl]pyridine; 1,2-bis(4-pyridyl)ethyne; 1,4-bis(4 pyridyl)benzene; 3,6-di(pyridin-4-yl)-1,2,4,5-tetrazine; 4-(9-(pyridin-4-yl)anthracen-10-yl)pyridine; 4,4'-bis(4-pyridyl)biphenyl; N,N'-bis(4-pyridyl)pyromellitic diimide; N,N'-di(pyridyl)-1,4,5,8-naphthalenetetracarboxydiimide; 4,4'-bipyrazolyl; 1,4-bis(1H-pyrazol-4-yl)benzene; 4,4'-buta-1,3-diyne-1,4-diylbis(1H-pyrazole); N,N'-bis(1H-pyrazol-4-yl)pyromellitic diimide; N,N'-bis(1H-pyrazol-4-yl)-1,4,5,8-naphthalenetetracarboxydiimide; 4,4'-bis(1H-pyrazol-4-yl)biphenyl; N,N'-bis(1H-pyrazol-4-yl)-1,4-benzenedicarboxamide; 4,4'-benzene-1,4-diylbis(1H-pyrazole); imidazole; 2-methylimidazole; 2-ethylimidazole; 2-nitroimidazole; benzimidazole; purine; 1,4-bis(1-imidazolyl)benzene; 9,10-(1-imidazolyl)anthracene; 4,4'-bis(1-imidazolyl)biphenyl; tetrakis(1-imidazolyl)borate; 1,2,4-triazol; 4,4'-bis-1,2,4-triazol; 4,4'-azo-1,2,4-triazol; 1,3-bis(1,2,4-triazol-1-yl)-propane; 1,4-bis(1,2,4-triazol-1-yl)-butane; 1,4-bis(1,2,4-triazol-1-ylmethyl)-benzene; 4,4'-bis(1,2,4-triazol-1-ylmethyl)-1,1'-biphenyl; 3-Methyl-1H, 1, 2, 4 triazole, and any combination thereof.

MOFs having mixtures of ligands can offer advantages. It may be preferred that the two chemically distinct organic ligands are chemical analogues. By chemical analogue, it is meant that the structural aspects of the ligand, specifically the backbone as well as the moieties that are involved in the bonding to metal ions, are the same.

An especially preferred feature is for the chemical distinct organic ligands to be chemical analogues, such that the organic ligands have the same backbone structure but differ from each other due to the functionalisation of the backbone structure. The structural similarity of how the different organic ligand anions bond to the metal ions means that variants of a specific MOF can be formed, for example having different LCDs.

For example, many MOFs have dicarboxylic acids as their organic ligands. Each carboxylic acid group is involved in bonding to a metal ion. The backbone structure refers to the structure between the two carboxylic acid binding groups. The dimensions of the backbone structure determine the LCD of the pores formed by the organic ligands connecting with the metal ions. The chemical differences come from functional pendant groups attached to the backbone structure.

For clarity, exemplary examples are shown below. In these cases, the backbone structure is (de-protonated) terephthalic acid (A).

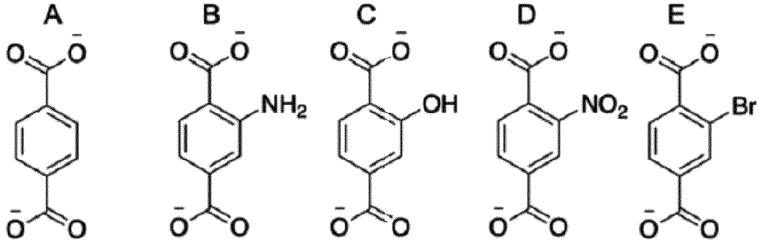

Two exemplary chemical analogues are terephthalic acid (CAS F-21-0) and 2-aminoterepthalic acid (CAS 10312-55-7). Other exemplary analogues of terephthalic acid include 2-bromoterephthalic acid (CAS 586-35-6), 2-nitroterephthalic acid (CAS 610-29-7), trimellitic acid (CAS 528-44-9), and 2-hydroxyterephthalic acid (CAS 636-94-2).

A further example is the use of the hydrophobic ligands of 1,2,4-triazole and 3-methyl 1,2,4-triazole with oxalic acid when forming variants of CALF-20. For example, mixes of 1:3, 1:1 and 3:1 of 1,2,4-triazole and 3-methyl 1,2,4-triazole can be used. Adjusting the ratio of the ligands allows the LCD to be varied.

Preferably, the hydrophobic metal organic framework comprises a metal cation selected from Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺², Al⁺³, Fe⁺³, Cr³⁺, Ru³⁺ and Co³⁺.

More preferably, the hydrophobic metal organic framework comprises a metal cation selected from Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺² and Al⁺³.

More preferably, the hydrophobic metal organic framework comprises a metal cation selected from Zn²⁺ and Ni²⁺.

Preferably, the hydrophobic metal organic framework is selected from CALF-20, TIFSIX-3-Ni, NbOFFIVE-1-Ni, and any combination thereof.

A suitable hydrophobic metal organic framework is CALF-20.

A suitable hydrophobic metal organic framework is TIFSIX-3-Ni.

A suitable hydrophobic metal organic framework is NbOFFIVE-1-Ni.

The hydrophobic metal organic framework may be in the form of a monolithic body such as an extrudate. The MOF may be in the form of a granule or powder or coated onto a substrate or embedded into a membrane.

The MOF body may have an envelope density of from 0.3 g/cm³ to 1.5 g/cm³.

MOFs, like many sorbents, are very often synthesised as a fine powder. The use of a fine powder in large industrial processes is very undesirable due to issues such as compaction and channelling. Sorbents often need to be formed into some type of larger shaped body for use for any large-scale process. These larger bodies need to be mechanically robust and attrition resistant to be industrially useful. In addition, the processes used to form the larger bodies should not degrade the performance of the adsorbent - for example by crushing the internal pores. Alternatively, fine sorbent powders can be incorporated into thin membranes or coated onto substrates. Coating a MOF onto a substrate or incorporating it into a membrane obviously significantly limits the amount of MOF that can be present in any given volume.

Industrial processes exist to form fine powders into larger bodies, such as tablets or extrudates, typically by the application of high pressure or use of a binder material, or both. However, these processes can reduce the sorbent properties of the adsorbent material. The application of high pressures, e.g., as often used in tabletting processes, can typically destroy or reduce the internal porosity of highly porous adsorbent materials. This is especially relevant to more pressure sensitive materials such as many metal-organic frameworks (MOFs).

An alternative to tabletting is extrusion of the porous material with a binder solution. However, the use of binders can bring other problems. High levels of particulate binders reduce performance of the adsorbent body by reducing the amount of adsorbent material in the body. High levels of binders applied as solutions or liquids can typically block some of the pores of the adsorbent material and hence reduce performance. However, the mechanical robustness of adsorbent bodies is typically not high enough if low levels of binder are used.

The ideal adsorbent body is one that combines high sorbent properties and physical robustness. It is also industrially preferable if the adsorbent body combines high density and high surface area and good sorbent performance. High-density means that a lower volume of adsorbent body is needed for a given process requirement, as compared to a low-density body. This has industrial advantages such as smaller, and hence cheaper, equipment. These requirements are often mutually contradictory. Applications by the inventors, described separately, describe preferred processes for making suitable monoliths or shaped bodies having preferred physical properties.

In any PSA separation process, it is typically necessary to control the kinetics of the adsorption and desorption processes. This is typically achieved by careful control of the applied pressures and temperatures for adsorption and desorption as well as the particle sizes and properties of the adsorbent bodies. Higher pressures and lower temperatures aid adsorption; conversely lower pressures and higher temperatures aid desorption. Conditions are typically optimised for the adsorbent material, the adsorbate, and the composition of the gas stream to be purified. If any of these operating parameters are not within the necessary parameters, then the overall result is typically non-optimum.

For example, if the adsorbent bodies are too large, the adsorption kinetics can be too slow as the exposed external surface area is small compared to the internal surface area. In addition, excessively large, shaped bodies can easily lead to "by-passing", where the gas stream does not come into sufficient contact with the adsorbent material for sufficient of the gas to be adsorbed. If the shaped bodies are too fine, pressures and gas flows within the pressure vessel can also be very non-uniform due to channelling.

### Krypton enriched metal-organic framework bodies.

The krypton enriched metal-organic framework bodies are formed during step (a).

### Waste gas stream.

The waste gas stream comprises greater than 10 v/v% krypton and greater than 0.5 v/v% CF₄. The waste gas stream may additionally comprise nitrogen. For example, the waste streams may comprise greater than 30 v/v% nitrogen.

### Krypton depleted gas stream.

The Krypton depleted gas stream is formed in step (a). The krypton depleted gas stream typically comprises less than 50 v/v% krypton, preferably less than 40 v/v% or more preferably less than 30 v/v% krypton. The krypton depleted gas stream typically comprises greater than 10 v/v% CF₄.

### Krypton enriched gas stream.

The Krypton enriched gas stream is formed during step (c).

The krypton enriched gas stream comprises greater than 50 v/v% krypton. If any CF₄ is present in the krypton enriched gas stream, then the krypton enriched gas stream typically comprises less than 0.01 v/v% CF₄.

### Process for the purification of waste streams from semiconductor plants.

The present invention also provides for the process for the purification of waste streams from semiconductor plants, wherein the process comprises the process for the separation of krypton from a waste gas stream as described above.

Preferably, the process for the separation of krypton from a waste gas stream is the final step of the process for the purification of waste streams from semiconductor plants.

### Method of measuring the largest cavity diameter.

Largest cavity diameters (LCDs) were determined by the Zeo++ program version 0.3 utilising the Crystal information files (.cif), which were taken from the Cambridge Structural Database at the Cambridge Crystallographic Data Center (CCDC).

### Method of measuring hydrophobicity.

Hydrophobicity can be classified by the sorption P/P₀ isotherm of the MOF for water vapour. MOFs that exhibit a Type V isotherm for water vapour are defined as being hydrophobic.

### Method of measuring envelope density.

The envelope density of a body can be measured by dividing the weight of a body (in grams) by its envelope volume (in mm³). The envelope volume is defined in ASTM D3766 as *"the ratio of the mass of a particle to the sum of the volumes of the solid in each piece and the voids within each piece, that is, within close-fitting imaginary envelopes completely surrounding each piece".* The envelope density of a body can be measured using techniques based on the Archimedes principle of volume displacement. For example, the envelope density can be measured by mercury porosimetry. At atmospheric pressure, mercury does not intrude into internal pores. Therefore, the volume of mercury displaced by a body at atmospheric pressure is the envelope volume of the body. Dividing the weight of the sample by this volume gives the envelope density. The use of mercury porosimetry is described below.

An alternative, and viable, technique for larger bodies, typically those with a diameter > 2 mm, is to use accurate 3-D scanners to measure the body volume. Suitable equipment includes the Leica BLK360. Preferably, powder pycnometers, such as the GeoPyc Model 1360 from Micrometrics Instrument Corp, can also be used to measure the envelope volumes and densities of bodies. If need be, the envelope volumes measured by these techniques can be used interchangeably with the envelope volume measured by mercury porosimetry.

The mercury porosity values can be measured according to ASTM D4284-12. Suitable equipment for carrying out ASTM D4284-12 include the Micromeritics AutoPore VI 9510 from Micromeritics Corp, USA. Other suitable equipment includes the PoreMaster series from Quantachrome. Unless otherwise specified by the equipment manufacturer, the default surface tension and contact angle of mercury are taken as being 485 mN/m and 130°, respectively. In ASTM D4284-12, mercury is forced into pores under pressure. A sample size of ~ 0.2 g is preferably used. The MOF monolithic bodies are preferably fragmented and sieved between 710 microns and 250 microns, and the sieved material used.

The pressure required to force mercury into the pores of the sample is inversely proportional to the size of the pores according to the Washburn equation. It is assumed that all pores are cylindrical for the purpose of characterisation. The porosimeter increases the pressure on the mercury inside the sample holder to cause mercury to intrude into increasingly small sample pores. The AutoPore VI or other suitable equipment will automatically translate the applied pressures into equivalent pore diameters using the Washburn equation and the values of contact angle and surface tension given above.

The envelope volume may be measured using techniques based on the Archimedes principle of volume displacement. The envelope volume of the sample is determined by the volume of mercury displaced at atmospheric pressure. At atmospheric (101.325 KPa) pressure, mercury does not intrude into internal pores, just external pores. Therefore, the volume of mercury displaced by a body at 101 KPa pressure may be used as the envelope volume.

**Performance of Inventive and Non-Inventive MOFs for the Selective**

### Adsorption of Krypton and CF₄

The benefits of using hydrophobic MOFs with the inventive range of LCD for the separation of krypton from CF₄ mixes are shown below.

Ultra-high-purity-grade Kr, CF₄, and N₂ were used for gas-sorption experiments. Micromeritics 3 Flex surface-area and pore-size analyzer was used for all adsorption experiments (up to 1 bar). Single component gas-sorption experiments were performed on approx. 50 to 100 mg of activated sample. To maintain a constant temperature throughout the duration of the experiment, a temperature-controlled bath was used. Samples were degassed on a Micromeritics Flowprep instrument prior to the analysis by applying high temperature under N₂ flow.

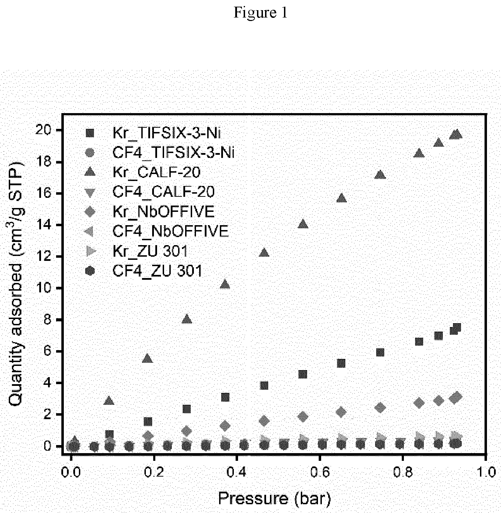

Figure 1 shows the relative performance of the inventive MOFs CALF-20, TIFSIX-3-Ni and NbOFFIVE-1-Ni MOFs as adsorbents for krypton as compared to CF₄. The LCDs of these MOFs (calculated using Zeo++) are below.

| | **LCD** (Angstroms) |
|---|---|
| CALF-20 | 4.3 |
| TIFSIX-3-Ni | 3.6 |
| NbOFFIVE-1-Ni | 3.6 |

These MOFs comprise preferred ligands and are described as hydrophobic.

| | **Ligand** |
|---|---|
| CALF-20 | 1,2,4 triazol |
| TIFSIX-3-Ni | pyrazine |
| NbOFFIVE-1-Ni | pyrazine |

| **MOF** | **Amount of Kr adsorbed cm3/g** | **Amount of CF4 adsorbed cm3/g** |
|---|---|---|
| | | |
| **CALF-20** | 17 | 0.3 |
| **TIFSIX-3-Ni** | 6.6 | 0.2 |
| **NbOFFIVE-Ni-1** | 2.8 | 0.2 |
| **ZU-301** | 0.6 | 0.1 |
| **CPO-27-Ni** | 11.8 | 18 |

**Figure 1** - volumes (at STP) of gases adsorbed by different MOFs at 21 °C and 0.8 atm.

ZU-301 and CPO-27-Ni are included as a comparative example. ZU-301 is a variant of CALF-20 but has a smaller LCD than CALF-20 due to a methyl group substitution in the ligand (3-methyl-1H 1,2,4 triazol). This reduces the LCD and means that LCD is too small for easy access of krypton. Whilst ZU-301 made completely with the 3-methyl-1H 1,2,4 triazol ligand is not suitable, variants of CALF-20/ZU-301 made with mixtures of 3-methyl-1H 1,2,4 triazol and 1,2,4 triazol can have LCDs in the range of interest. The inability of a MOF having an LCD greater than the specified limit to selectively adsorb krypton compared to CF₄ is shown in comparing krypton and CF₄ adsorption by CPO-27-Ni (Ni-MOF-74). CPO-27-Ni, for example, has an LCD of 11.5 angstroms as calculated by Zeo++ and will adsorn both gases.

Thus, the data shows that MOFs that are hydrophobic and have the correct range of LCD dimensions are suitable for use in processes for adsorbing and purifying krypton from krypton/CF₄ mixes.

CPO-27-Ni could be used to separate Kr from N₂ since it has a reported experimental selectivity for Kr over N₂ of 1.87 based on the ratio of the Henry's constants at 298 K.

The effect of controlling temperature for a MOF such as TIFSIX-3-Ni is significant. The adsorption of krypton is approximately 2x greater at 0 °C than at 21 °C and lowering temperatures during the adsorption temp compared to the desorption step can be advantageous.

### EXAMPLE

A waste gas stream comprising of 46.5 % N₂, 40 % Kr and 13.5 % CF₄ (in v/v) was purified as follows using a system comprising three separate but similar adsorption columns.

0.43 moles of the waste gas were fed to an adsorption bed, filled with - 1.4 kg of TIFSIX-3-Ni, at 500kPa and 21 °C. A krypton depleted stream comprising of 50 % N₂, 28 % Kr and 22 % CF₄ (in v/v) was produced from the product-end during step (a).

The flow of waste gas stream was then stopped (step (b)), followed by a rinsing step. During the rinsing step, ~0.56 moles of a high purity (99.92 % v/v) Kr stream was fed to the adsorption bed at 500kPa to purge the adsorption column of CF₄. During the rinsing step, the gas coming out of the product-end was used to pressure a second adsorption column filled with the same quantity of TIFSIX-3-Ni.

The adsorption column was subsequently regenerated by reducing the pressure in the adsorption column to 3 kPa to desorb the adsorbed gases (step (c)) to produce a krypton-enriched gas stream, thereby recovering almost 56 % of the Kr fed as part of the waste gas stream. The average composition of the Kr enriched gas obtained during step (c) was approximately 91 v/v% Kr, 9 v/v% N₂ and 270 ppm CF₄.

The Kr enriched gas was then subsequently processed in another adsorption column filled with CPO-27-Ni. Since CPO-27-Ni shows selectivity towards Kr vis-à-vis N₂, an adsorption step could then recover the Kr at 99.92 % v/v purity.

## Claims

1. A process for the separation of krypton from a waste gas stream, wherein the waste gas stream comprises greater than 10 v/v% krypton and greater than 0.5 v/v% CF₄, wherein the process comprises the steps of:
(a) passing the waste gas stream through a bed of material comprising hydrophobic metal-organic framework bodies to form krypton enriched metal-organic framework bodies and a krypton depleted gas stream,
wherein the hydrophobic metal-organic framework forming the bodies has a largest cavity diameter of from 3.3 angstroms to 4.5 angstroms,
and wherein step (a) is carried out at a pressure of from 100 kPa to 1000 kPa and at a temperature of from 0°C to 50°C;
(b) stopping the passage of the waste gas stream through the bed of material; and
(c) subjecting the krypton-enriched metal-organic framework bodies to a temperature of between 0 °C and 100 °C and a pressure of less than 100 kPa to remove at least some of the krypton from the krypton-enriched metal-organic framework bodies to form a krypton-enriched gas stream,
wherein the krypton-enriched gas stream comprises greater than 50 v/v% krypton and, if present, less than 0.01 v/v% CF₄.

2. The process according to Claim 1, wherein the hydrophobic metal organic framework comprises a ligand selected from: pyrazine; 4,4'-bipyridine; 4,4'-azo-bis(pyridine); 1,2-bis(4-pyridyl)ethene; 1,2-bis(4-pyridyl)ethane; 1,2-di(pyridine-4-yl)ethane-1,2-diol; 3-[(trimethylsilyl)ethynyl]-4-[2-(4-pyridinyl)ethenyl]pyridine; 1,2-bis(4-pyridyl)ethyne; 1,4-bis(4 pyridyl)benzene; 3,6-di(pyridin-4-yl)-1,2,4,5-tetrazine; 4-(9-(pyridin-4-yl)anthracen-10-yl)pyridine; 4,4'-bis(4-pyridyl)biphenyl; N,N'-bis(4-pyridyl)pyromellitic diimide; N,N'-di(pyridyl)-1,4,5,8-naphthalenetetracarboxydiimide; 4,4'-bipyrazolyl; 1,4-bis(1H-pyrazol-4-yl)benzene; 4,4'-buta-1,3-diyne-1,4-diylbis(1H-pyrazole); N,N'-bis(1H-pyrazol-4-yl)pyromellitic diimide; N,N'-bis(1H-pyrazol-4-yl)-1,4,5,8-naphthalenetetracarboxydiimide; 4,4'-bis(1H-pyrazol-4-yl)biphenyl; N,N'-bis(1H-pyrazol-4-yl)-1,4-benzenedicarboxamide; 4,4'-benzene-1,4-diylbis(1H-pyrazole); imidazole; 2-methylimidazole; 2-ethylimidazole; 2-nitroimidazole; benzimidazole; purine; 1,4-bis(1-imidazolyl)benzene; 9,10-(1-imidazolyl)anthracene; 4,4'-bis(1-imidazolyl)biphenyl; tetrakis(1-imidazolyl)borate; 1,2,4-triazol; 4,4'-bis-1,2,4-triazol; 4,4'-azo-1,2,4-triazol; 1,3-bis(1,2,4-triazol-1-yl)-propane; 1,4-bis(1,2,4-triazol-1-yl)-butane; 1,4-bis(1,2,4-triazol-1-ylmethyl)-benzene and 4,4'-bis(1,2,4-triazol-1-yl methyl)-1,1'-biphenyl, 3-Methyl 1H, 1,2, 4 triazole and mixtures and combinations thereof.

3. The process according to any preceding Claim, wherein the hydrophobic metal organic framework comprises a metal cation selected from Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺², Al⁺³, Fe⁺³, Cr³⁺, Ru³⁺ , and Co³⁺.

4. The process according to any preceding Claim, wherein the hydrophobic metal organic framework is selected from CALF-20, TIFSIX-3-Ni, NbOFFIVE-1-Ni, and any combination thereof.

5. The process according to any preceding Claim, wherein the hydrophobic metal organic framework is CALF-20.

6. The process according to any of Claims 1-4, wherein the hydrophobic metal organic framework is TIFSIX-3-Ni.

7. The process according to any of Claims 1-4, wherein the hydrophobic metal organic framework is NbOFFIVE-1-Ni.

8. The process according to any preceding Claim, wherein the hydrophobic metal organic framework is in the form of a body.

9. The process according to Claim 8, wherein the MOF body has an envelope density of from 0.3 g/cm³ to 1.5 g/cm³.

10. The process according to any preceding Claim, wherein the waste gas stream additionally comprises nitrogen.

11. The process according to any preceding Claim, wherein the process is a pressure swing adsorption purification process.

12. The process for the purification of waste streams from semiconductor plants, wherein the process comprises the process for the separation of krypton from a waste gas stream according to Claim 1.

13. The process according to Claim 1, wherein there is a rinsing step (step b2) between steps (a) and (b) wherein krypton having a purity of > 99 v/v% is contacted with the krypton-enriched MOF bodies.

14. A process according to any preceding claim wherein the krypton-enriched gas stream from step (c) is then further purified to remove nitrogen by contacting it with a hydrophobic MOF having an LCD of greater than 3.3 angstroms so as to selectively adsorb krypton.

## Patentansprüche

1. Verfahren zur Kryptontrennung aus einem Abgasstrom, wobei der Abgasstrom mehr als 10 Vol.-% Krypton und mehr als 0,5 Vol.-% CF₄ umfasst, wobei das Verfahren die folgenden Schritte umfasst:
(a) Leiten des Abgasstroms durch ein Materialbett, das hydrophobe metallorganische Gerüstkörper umfasst, um kryptonangereicherte metallorganische Gerüstkörper und einen kryptonabgereicherten Gasstrom zu bilden,
wobei das hydrophobe metallorganische Gerüst, das die Körper bildet, einen größten Hohlraumdurchmesser von 3,3 Ångström bis 4,5 Ångström aufweist,
und wobei Schritt (a) bei einem Druck von 100 kPa bis 1000 kPa und einer Temperatur von 0 °C bis 50 °C durchgeführt wird;
(b) Anhalten der Leitung des Abgasstroms durch das Materialbett; und
(c) Aussetzen der kryptonangereicherten metallorganischen Gerüstkörper einer Temperatur zwischen 0 °C und 100 °C und einem Druck von weniger als 100 kPa, um zumindest einen Teil des Kryptons aus den kryptonangereicherten metallorganischen Gerüstkörpern zu entfernen, um einen kryptonangereicherten Gasstrom zu bilden,
wobei der kryptonangereicherte Gasstrom mehr als 50 Vol.-% Krypton und, falls vorhanden, weniger als 0,01 Vol.-% CF₄ umfasst.

2. Verfahren nach Anspruch 1, wobei der hydrophobe metallorganische Gerüstkörper einen Ligand umfasst, der von Folgenden ausgewählt ist: Pyrazin; 4,4'-Bipyridin; 4,4'-Azo-bis(pyridin); 1,2-Bis(4-pyridyl)ethen; 1,2-Bis(4-pyridyl)ethan; 1,2-Di(pyridin-4-yl)ethan-1,2-diol; 3-[(Trimethylsilyl)ethynyl]-4-[2-(4-pyridinyl)ethenyl]pyridin; 1,2-Bis(4-pyridyl)ethyn; 1,4-Bis(4 pyridyl)benzol; 3,6-Di(pyridin-4-yl)-1,2,4,5-tetrazin; 4-(9-(Pyridin-4-yl)anthracen-10-yl)pyridin; 4,4'-bis(4-Pyridyl)biphenyl; N,N'-Bis(4-pyridyl)pyromellitdiimid; N,N'-Di(pyridyl)-1,4,5,8-naphthalentetracarboxydiimid; 4,4'-Bipyrazolyl; 1,4-Bis(1H-pyrazol-4-yl)benzol; 4,4'-Buta-1,3-diyne-1,4-diylbis(1H-pyrazol); N,N'-Bis(1H-pyrazol-4-yl)pyromellitdiimid; N,N'-Bis(1H-pyrazol-4-yl)-1,4,5,8-naphthalentetracarboxydiimid; 4,4'-Bis(1H-pyrazol-4-yl)biphenyl; N,N'-Bis(1H-pyrazol-4-yl)-1,4-benzoldicarboxamid; 4,4'-Benzol-1,4-diylbis(1H-pyrazol); Imidazol; 2-Methylimidazol; 2-Ethylimidazol; 2-Nitroimidazol; Benzimidazol; Purin; 1,4-Bis(1-imidazolyl)benzol; 9,10-(1-Imidazolyl)anthracen; 4,4'-Bis(1-imidazolyl)biphenyl; Tetrakis(1-imidazolyl)borat; 1,2,4-Triazol; 4,4'-Bis-1,2,4-triazol; 4,4'-Azo-1,2,4-triazol; 1,3-Bis(1,2,4-triazol-1-yl)-propan; 1,4-Bis(1,2,4-triazol-1-yl)-butan; 1,4-Bis(1,2,4-triazol-1-ylmethyl)-benzol und 4,4'-Bis(1,2,4-triazol-1-ylmethyl)-1,1'-biphenyl, 3-Methyl 1H, 1,2, 4 triazol und Mischungen und Kombinationen davon.

3. Verfahren nach einem vorhergehenden Anspruch, wobei das hydrophobe metallorganische Gerüst ein Metallkation umfasst, das aus Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺², Al⁺³, Fe⁺³, Cr³⁺, Ru³⁺ und Co³⁺ ausgewählt ist.

4. Verfahren nach einem vorhergehenden Anspruch, wobei das hydrophobe metallorganische Gerüst aus CALF-20, TIFSIX-3-Ni, NbOFFIVE-1-Ni und einer Kombination davon ausgewählt ist.

5. Verfahren nach einem vorhergehenden Anspruch, wobei das hydrophobe metallorganische Gerüst CALF-20 ist.

6. Verfahren nach einem der Ansprüche 1 bis 4, wobei das hydrophobe metallorganische Gerüst TIFSIX-3-Ni ist.

7. Verfahren nach einem der Ansprüche 1 bis 4, wobei das hydrophobe metallorganische Gerüst NbOFFIVE-1-Ni ist.

8. Verfahren nach einem vorhergehenden Anspruch, wobei das hydrophobe metallorganische Gerüst in Form eines Körpers vorliegt.

9. Verfahren nach Anspruch 8, wobei der MOF-Körper eine Hülldichte von 0,3 g/cm³ bis 1,5 g/cm³ aufweist.

10. Verfahren nach einem vorhergehenden Anspruch, wobei der Abgasstrom zusätzlich Stickstoff umfasst.

11. Verfahren nach einem vorhergehenden Anspruch, wobei das Verfahren ein Reinigungsverfahren durch Druckwechseladsorption ist.

12. Verfahren zur Reinigung von Abfallströmen aus Halbleiteranlagen, wobei das Verfahren das Verfahren zur Kryptontrennung aus einem Abgasstrom nach Anspruch 1 umfasst.

13. Verfahren nach Anspruch 1, wobei es einen Spülschritt (Schritt b2) zwischen den Schritten (a) und (b) gibt, wobei Krypton mit einer Reinheit von > 99 Vol.-% mit den kryptonangereicherten MOF-Körpern in Kontakt gebracht wird.

14. Verfahren nach einem vorhergehenden Anspruch, wobei der kryptonangereicherte Gasstrom aus Schritt (c) dann weiter gereinigt wird, um Stickstoff zu entfernen, indem er mit einem hydrophoben MOF mit einer LCD von mehr als 3,3 Angström in Kontakt gebracht wird, um Krypton selektiv zu adsorbieren.

## Revendications

1. Processus de séparation de krypton d'un courant de gaz d'échappement, dans lequel le courant de gaz d'échappement comprend plus de 10 % v/v de krypton et plus de 0,5 % v/v de CF₄, dans lequel le processus comprend les étapes suivantes :
(a) le passage du courant de gaz d'échappement à travers un lit de matériau comprenant des corps à ossature organométalliques hydrophobes pour former des corps à ossature organométalliques enrichis en krypton et un courant de gaz appauvri en krypton,
dans lequel l'ossature organométallique hydrophobe formant les corps présente un plus grand diamètre de cavité de 3,3 angströms à 4,5 angströms,
et dans lequel l'étape (a) est effectuée à une pression de 100 kPa à 1 000 kPa et à une température de 0 °C à 50 °C ;
(b) l'arrêt du passage du courant de gaz d'échappement à travers le lit de matériau ; et
(c) la soumission des corps à ossature organométalliques enrichis en krypton à une température comprise entre 0 °C et 100 °C et à une pression inférieure à 100 kPa pour éliminer au moins une partie du krypton des corps à ossature organométalliques enrichis en krypton pour former un courant de gaz enrichi en krypton,
dans lequel le courant de gaz enrichi en krypton comprend plus de 50 % v/v de krypton et, s'il est présent, moins de 0,01 % v/v de CF₄.

2. Processus selon la revendication 1, dans lequel l'ossature organométallique hydrophobe comprend un ligand choisi parmi : pyrazine ; 4,4'-bipyridine ; 4,4'-azo-bis(pyridine) ; 1,2-bis(4-pyridyl)éthène ; 1,2-bis(4-pyridyl)éthane ; 1,2-di(pyridine-4-yl)éthane-1,2-diol ; 3-[(triméthylsilyl)éthynyl]-4-[2-(4-pyridinyl)éthényl]pyridine ; 1,2-bis(4-pyridyl)éthyne ; 1,4-bis(4 pyridyl)benzène ; 3,6-di(pyridin-4-yl)-1,2,4,5-tétrazine ; 4-(9-(pyridin-4-yl)anthracène-10-yl)pyridine ; 4,4'-bis(4-pyridyl)biphényle ; N,N'-bis(4-pyridyl)pyromellitique diimide ; N,N'-di(pyridyl)-1,4,5,8-naphtalènetétracarboxydiimide ; 4,4'-bipyrazolyl ; 1,4-bis(1H-pyrazol-4-yl)benzène ; 4,4'-buta-1,3-diyne-1,4-diylbis(1H-pyrazole) ; N,N'-bis(1H-pyrazol-4-yl)pyromellitic diimide ; N,N'-bis(1H-pyrazol-4-yl)-1,4,5,8-naphtalène-tétracarboxydiimide ; 4,4'-bis(1H-pyrazol-4-yl)biphényl ; N,N'-bis(1H-pyrazol-4-yl)-1,4-benzènedicarboxamide ; 4,4'-benzène-1,4-diylbis(1H-pyrazole) ; imidazole ; 2-méthylimidazole ; 2-éthylimidazole ; 2-nitroimidazole ; benzimidazole ; purine ; 1,4-bis(1-imidazolyl)benzène ; 9,10-(1-imidazolyl)anthracène ; 4,4'-bis(1-imidazolyl)biphényle ; tétrakis(1-imidazolyl)borate ; 1,2,4-triazol ; 4,4'-bis-1,2,4-triazol ; 4,4'-azo-1,2,4-triazol ; 1,3-bis(1,2,4-triazol-1-yl)-propane ; 1,4-bis(1,2,4-triazol-1-yl)-butane ; 1,4-bis(1,2,4-triazol-1-ylméthyl)-benzène et 4,4'-bis(1,2,4-triazol-1-yl méthyl)-1,1'-biphényle, 3-méthyl 1H, 1,2,4 triazole et des mélanges et combinaisons de ceux-ci.

3. Processus selon une quelconque revendication précédente, dans lequel l'ossature organométallique hydrophobe comprend un cation métallique choisi parmi Cu²⁺, Zn²⁺, Co²⁺, Ni²⁺, Mn²⁺, Zr²⁺, Fe²⁺, Ca²⁺, Ba²⁺, Cs²⁺, Pb²⁺, Pt²⁺, Pd²⁺, Ru²⁺, Rh²⁺, Cd²⁺, Mg⁺², Al⁺³, Fe⁺³, Cr³⁺, Ru³⁺ et Co³⁺.

4. Processus selon une quelconque revendication précédente, dans lequel l'ossature organométallique hydrophobe est choisie parmi CALF-20, TIFSIX-3-Ni, NbOFFIVE-1-Ni, et toute combinaison de ceux-ci.

5. Processus selon une quelconque revendication précédente, dans lequel l'ossature organométallique hydrophobe est CALF-20.

6. Processus selon l'une quelconque des revendications 1 à 4, dans lequel l'ossature organométallique hydrophobe est TIFSIX-3-Ni.

7. Processus selon l'une quelconque des revendications 1 à 4, dans lequel l'ossature organométallique hydrophobe est NbOFFIVE-1-Ni.

8. Processus selon une quelconque revendication précédente, dans lequel l'ossature organométallique hydrophobe se présente sous la forme d'un corps.

9. Processus selon la revendication 8, dans lequel le corps à MOF présente une densité d'enveloppe de 0,3 g/cm³ à 1,5 g/cm³.

10. Processus selon une quelconque revendication précédente, dans lequel le courant de gaz d'échappement comprend en outre de l'azote.

11. Processus selon une quelconque revendication précédente, dans lequel le processus est un processus de purification par adsorption modulée en pression.

12. Processus de purification de courants d'échappement provenant d'usines de semiconducteurs, dans lequel le processus comprend le processus de séparation de krypton d'un courant de gaz d'échappement selon la revendication 1.

13. Processus selon la revendication 1, dans lequel il y a une étape de rinçage (étape b2) entre les étapes (a) et (b), dans lequel du krypton présentant une pureté > 99 % v/v est mis en contact avec les corps à MOF enrichis en krypton.

14. Processus selon une quelconque revendication précédente, dans lequel le courant de gaz enrichi en krypton provenant de l'étape (c) est ensuite davantage purifié pour éliminer l'azote en le mettant en contact avec une MOF hydrophobe présentant un LCD de plus de 3,3 angströms de façon à adsorber sélectivement le krypton.
